# EUROPÄISCHE PATENTSCHRIFT

(11) **EP 2 310 697 B1**
(45) Veröffentlichungstag und Bekanntmachung des Hinweises auf die Patenterteilung: **17.10.2012**
(21) Anmeldenummer: 09780141.9
(22) Anmeldetag: 03.07.2009
(51) Int. Cl.: F16B 25/10

(54) **SCHRAUBE**
SCREW
VIS

(30) Priorität: 07.07.2008 DE 102008033509
(43) Veröffentlichungstag der Anmeldung: 20.04.2011
(73) Patentinhaber: Arnold Umformtechnik GmbH & Co. KG, 74670 Forchtenberg-Ernsbach (DE)
(72) Erfinder: WERTHWEIN, Bernd, 74670 Forchtenberg-Sindringen (DE)
(74) Vertreter: Patentanwälte Ruff, Wilhelm, Beier, Dauster & Partner
(86) Internationale Anmeldenummer: PCT/EP2009/058422
(87) Internationale Veröffentlichungsnummer: WO 2010/003901

(56) Entgegenhaltungen:
- EP-A- 0 338 973
- DE-A1- 19 653 394
- DE-A1-102006 034 583
- DE-A1-102006 058 464

## Beschreibung

Die Erfindung geht aus von einer gewindeformenden Schraube, insbesondere nach dem Oberbegriff des Anspruchs 1. Eine derartige Schraube ist aus der DE 10 2006 058 464 A1 bekannt.

Blechkomponenten, die lösbar miteinander verbunden werden sollen, werden in der Regel durch Blechschrauben oder modifizierte Gewindeelemente verschraubt. In der Regel erfordert die Verschraubung eine Vorlochung des Bauteils sowie des zu klemmenden Teils. Die Vorlochung in dem Bauteil kann durch Bohren, Stanzen, Tiefziehen oder dergleichen erfolgen. Die Gewinde werden entweder schon vorgeformt beziehungsweise vorgeschnitten, oder aber durch die Schraube selbst beim Eindrehen geformt.

Es ist bereits eine loch- und gewindeformende Schraube bekannt, die einen Schraubenschaft mit einem Gewindeabschnitt und einem sich daran anschließenden gewindefreien Teil enthält. Der gewindefreie Teil des Schraubenschafts weist in dem sich an das Gewinde anschließenden Teil zunächst Zylinderform auf, verringert sich also im Durchmesser nicht. Dieser zylindrische Teil soll eine der vierfachen Blechdicke entsprechende Länge aufweisen. Die Schraubenspitze ist ballig ausgebildet (DE 3909725 C1).

Ebenfalls bekannt ist eine Gewinde erzeugende Schraube mit einem zylindrischen Gewindeabschnitt und einer kegelförmigen Spitze, die in einer wirklichen Spitze endet. Im Bereich der Schraubenspitze ist ein Gewindegang vorhanden (DE 10 2006 058 464 A1).

Es ist bereits eine Schraube mit einem trilobularen Gewindeschaft und einem bis zu einer Schraubenspitze reichenden Formabschnitt bekannt, der unmittelbar hinter der Schraubenspitze einen Gewindegang oder einen Doppelgewindegang aufweist, sonst aber gewindefrei ist (siehe die e.g. DE 102006058464 A1).

Weiterhin ist eine loch- und gewindeformende Schraube bekannt, die einen vorderen stumpfen gewindefreien Formabschnitt und daran anschließend einen Gewindeschaft aufweist. Der Querschnitt der Schraube ist kreisrund (DE 102006034583 A1).

Ebenfalls bekannt ist ein Befestigungselement mit Führungsrondelle, das einen Schaft mit zwei hintereinander angeordneten Abschnitten aufweist, wobei in dem zur Spitze hin angeordneten Abschnitt das Gewinde nicht vollständig ausgebildet ist, im restlichen Bereich vollständig. Der Querschnitt des Schraubenschafts ist kreisrund (EP 0338973 A 2).

Weiterhin ist ein Werkzeug zum spanlosen Erzeugen eines Durchzugs mit Innengewinde in einem Arbeitsgang bekannt (DE 19653394 A1).

Der Erfindung liegt die Aufgabe zu Grunde, eine gewindeformende Schraube im Hinblick auf verbesserte Eigenschaften weiterzuentwickeln.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Im Gegensatz zum Stand der Technik nimmt der gewindefreie Abschnitt direkt am Ende des Gewindes schon in seinem Durchmesser ab. Dieser mindestens teilweise gewindefreie in seinem Durchmesser abnehmende Bereich dient dazu, nach dem Herstellen eines Lochs einen Durchzug zu formen, der dazu dient, ein besseres Halten des Gewindes in dem Material zu ermöglichen. Dieser Abschnitt wird daher Formabschnitt genannt.

Erfindungsgemäß ist vorgesehen , dass die Gewindekante des Schraubenschafts in einer Projektion senkrecht zu einer Ebene der Längsachse der Schraube von einer Kreisform abweichend ein Polygon, insbesondere ein Dreieck mit abgerundeten Ecken und konvexen Seiten bildet, also eine Form, die auch als polylobular bezeichnet wird.

Insbesondere weist auch der Kernquerschnitt des Gewindeabschnitts der Schraube eine solche Form auf.

Erfindungsgemäß ist vorgesehen , dass der Gewindeabschnitt des Schraubenschafts einen ersten sich an den Formabschnitt anschließenden Furchabschnitt und einen sich daran anschließenden zweiten bis zu dem Schraubenkopf reichenden Halteabschnitt aufweist. Es ist dabei vorgesehen , dass der Querschnitt durch den Schraubenschaft in dem Halteabschnitt weniger stark polygonförmig ausgebildet ist als in dem Furchabschnitt. Insbesondere kann der Halteabschnitt einen kreisförmigen Querschnitt aufweisen. Damit wird berücksichtigt, dass der Furchabschnitt in erster Linie dazu da ist, in dem gebildeten Durchzug ein Gewinde zu formen, ohne dass der Einschraubwiderstand zu groß wird. In dem Halteabschnitt, der unmittelbar unterhalb des Schraubenkopfs vorhanden ist, soll aber die eigentliche Festlegung des zu verschraubenden Gegenstands erfolgen.

In nochmaliger Weiterbildung der Erfindung kann vorgesehen sein, dass der Querschnitt des gewindefreien Schaftabschnitts der Schraube die Form eines Polygons, insbesondere eines Dreiecks, mit abgerundeten Ecken und konvexen Seiten aufweist.

In bevorzugter Ausführungsform weist die Schraube also über ihre gesamte Länge gegebenenfalls mit Ausnahme des Halteabschnitts einen solchen polylobularen Querschnitt auf.

Der Außendurchmesser des Gewindeabschnitts kann unmittelbar vor dem Formabschnitt abnehmend ausgebildet sein.

Die Seitenlinie des Formabschnitts kann mindestens teilweise geradlinig verlaufen, so dass der Formabschnitt kegelförmig ausgebildet ist.

Es ist aber ebenfalls möglich, dass die Seitenlinie des Formabschnitts gekrümmt verläuft, wobei es sich dabei um eine konstante Krümmung oder auch um zwei Abschnitte mit unterschiedlicher aber konstanter Krümmung handeln kann.

Der Formabschnitt kann insgesamt gewindefrei sein oder aber teilweise gewindefrei. Beispielsweise kann die Schraubenspitze von ihrem vorderen Ende ausgehend zunächst ein sich über wenige Gewindegänge erstreckendes Gewinde aufweisen, an das sich dann ein glattflächiger Abschnitt anschließt. Diese ersten Gewindegänge dienen dazu, die Schraube leichter in das Material, in dem sie ein Loch bilden soll, eindringen zu lassen. Der sich anschließende gewindefreie Abschnitt vergrößert dieses Loch.

Ebenfalls möglich ist es, dass der Formabschnitt von der Spitze aus zunächst glatt bleibt, dass aber schon vor dem Erreichen des Furchabschnitts in dem Formabschnitt ein Gewinde vorhanden ist, dessen Gewindehöhe allmählich zunimmt.

Als besonders sinnvoll hat es sich herausgestellt, wenn es sich bei dem Gewinde um ein Rundgewinde handelt.

Die von der Erfindung vorgeschlagene Schraube kann nicht nur bei Blechen Anwendung finden, sondern auch bei Faserverbundstoffen und Kunststoffen und bei der Befestigung von Gegenständen aus Materialkombinationen.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht der von der Erfindung vorgeschlagenen Schraube;
- Figur 2: einen Querschnitt durch die Schraube;
- Figur 3: in vergrößertem Maßstab einen Axialschnitt;
- Figur 4: eine Seitenansicht einer Schraube nach einer zweiten Ausführungsform;
- Figur 5: die Seitenansicht eines mit einem Kopf versehenen Draht Stifts;
- Figur 6: einen Querschnitt durch den Draht Stifts längs Linie VI-VI;
- Figur 7: einen Querschnitt durch den Draht Stifts längs Linie VII-VII;
- Figur 8: eine Seitenansicht einer Schraube nach einer weiteren Ausführungsform;
- Figur 9: den vorderen Bereich einer Schraube nach einer nochmals weiteren Ausführungsform;
- Figur 10: eine eingeschraubte Schraube;
- Figur 11: eine Seitenansicht einer Schraube nach einer weiteren Ausführungsform;
- Figur 12: eine Einzelheit des Gewindes der Schraube der Figur 11.

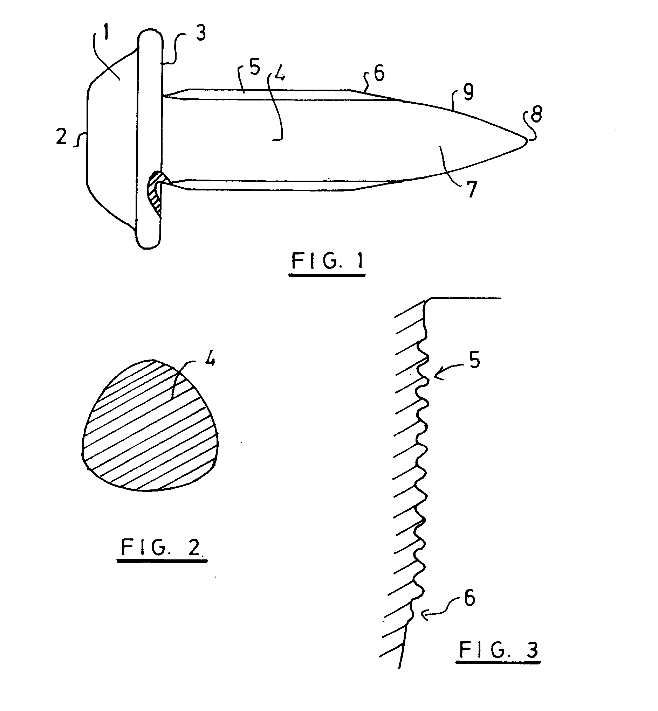

Die in Figur 1 dargestellte Schraube enthält einen Schraubenkopf 1, der in seiner Stirnfläche 2 eine Vertiefung aufweist, die zum Antrieb der Schraube dient. Es wäre auch möglich, dass als Schraubenantrieb ein Vorsprung vorgesehen ist.

Von der in einer Ebene liegenden Unterseite 3 des Schraubenkopfs 1 aus erstreckt sich mittig ein Schraubenschaft 4, der von dem Schraubenkopf 1 ausgehend zunächst zylindrisch ausgebildet ist und ein Gewinde 5 aufweist. Das Gewinde läuft dann in einem relativ kurzen Abschnitt 6 aus. Bei diesem Abschnitt handelt es sich um die so genannte Furchzone. An diesen mit dem Gewinde 5 versehenen Abschnitt schließt sich dann der gewindefreie Abschnitt 7 an, der in einer abgerundeten Spitze 8 ausläuft. Die in Figur 1 zu sehende Außenkontur 9 des gewindefreien Abschnitts 7 verläuft durchgängig gekrümmt, und zwar in einer konstanten Krümmung. Insgesamt bildet der gewindefreie Abschnitt 7 eine ballistische Spitze.

Die Figur 2 zeigt einen Querschnitt durch den Schraubenschaft. Dabei ist aus Gründen der Vereinfachung der Verlauf des Außendurchmessers des Gewindes in eine Ebene verlegt worden. Man sieht also, dass der Querschnitt durch den Schraubenschaft von einem Dreieck mit abgerundeten Ecken und konvex gekrümmten Seiten gebildet wird. Eine solche Form wird auch als trilobulare Form bezeichnet.

Diese Querschnittsform ist in der Schraube sowohl beim Kern des Gewindeabschnitts, als auch beim Außendurchmesser des Gewindes 5 als auch in dem gewindefreien Abschnitt 7 vorhanden.

Die Figur 3 zeigt in vergrößertem Maßstab einen Teilschnitt durch den Gewindeabschnitt des Schafts 4 der Schraube. Es ist hier zu sehen, dass das Gewinde 5 ein Rundgewinde ist, bei dem die Gewindegänge sowohl an den Vorsprüngen als auch an den Vertiefungen abgerundet verlaufen.

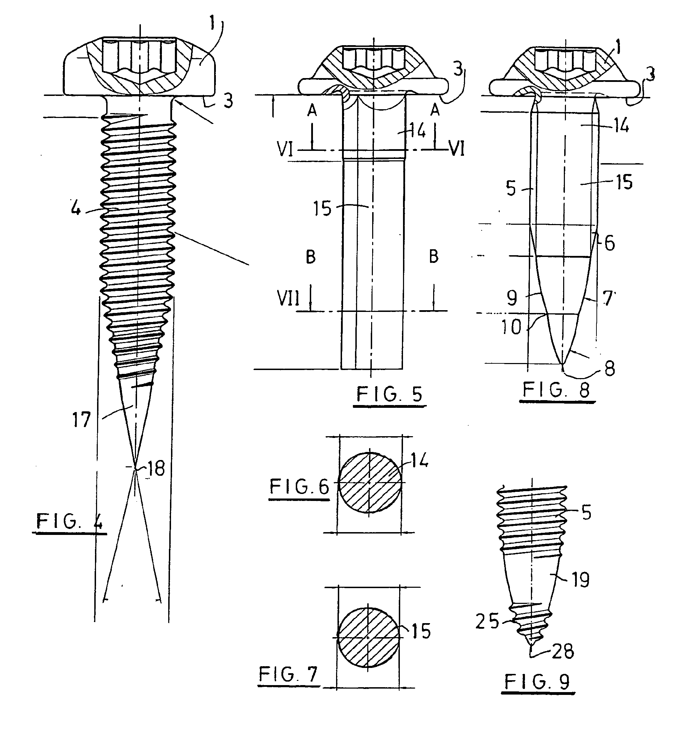

Während die Figur 1 eine Schraube zeigt, bei der der vordere Formabschnitt 7 vollständig gewindefrei bleibt, zeigt die Figur 4 eine Seitenansicht einer Schraube, bei der der vordere Furchabschnitt 17 von einer scharfkantigen Spitze 18 ausgehend zwar zunächst gewindefrei bleibt, woran sich dann aber ein Abschnitt anschließt, in dem ein Gewinde sich allmählich ausbildet, bis es dann in den Schaftabschnitt 4 mit dem vollständig ausgebildeten Gewinde übergeht.

Im folgenden wird nun auf die Figur 5 eingegangenen, die einen Rohling zeigt, aus dem die dargestellten Schrauben hergestellt werden. Während man bei den Seitenansichten die unterschiedlichen Querschnittsformen nicht unbedingt erkennen kann, ist dies bei der Darstellung des Ausgangsprodukt besser möglich. Als Ausgangsprodukt für die Herstellung einer Schraube dient ein Draht, bei dem zunächst einen Schraubenkopf 1 angeformt wird. Dieser Schraubenkopf 1 ist in Figur fünf teilweise im Schnitt dargestellt, so dass man die im Kopf vorhandenen Antriebsausbildung in Form einer Vertiefung ebenfalls sehen kann. Unmittelbar unterhalb der Unterseite des Schraubenkopfs 1 weist der Draht einen im Durchmesser etwas größeren Querschnitt auf. Die Länge dieses Abschnitts 14 entspricht etwa dem Durchmesser. An diesen ersten Abschnitt 14 schließt sich dann der restliche Teil des Drahtes an, wo der Durchmesser etwas kleiner ist als im oberen Bereich. Aus den Figuren 6 und 7 kann man sehen, dass in diesem Stadium der Herstellung der Schraube auch die Querschnittsform der beiden durch eine Stufe getrennten Abschnitte unterschiedlich ist. In dem sich unmittelbar an den Schraubenkopf anschließenden Bereich 14 ist der Querschnitt beispielsweise vollständig kreisrund, während er in dem anderen Abschnitt eine bereits erwähnte polygonale Form aufweist. Diese beiden unterschiedlichen Querschnittsformen und auch Querschnittsgröße bleiben nach dem Aufwalzen des Gewindes erhalten. Dadurch weist die in Figur 8 nochmals dargestellte Schraube einen sich an den Schraubenkopf anschließenden Halteabschnitt 14 auf, an den sich dann der Furchabschnitt 15 anschließt, in dem der Querschnitt die polygonale Form aufweist. Diese polygonale Form setzt sich auch über den Furchabschnitt 7 bis zur Schraubenspitze 8 fort. Bei der Ausführungsform der Figur 8 weist die Schraubenspitze 7 zwei Abschnitte auf, in denen die Seitenlinie 9 gekrümmt verläuft, und zwar in beiden Abschnitten mit einer unterschiedlichen Krümmung, so dass dadurch eine Art Einbuchtung 10 gebildet wird.

Bei der in Figur 9 nur im vorderen Bereich dargestellten Ausführungsform der von der Erfindung vorgeschlagenen Schraube ist unmittelbar an die Schraubenspitze 28 anschließend ein sich über etwa zwei Gewindegänge erstreckendes vorderes Gewinde 25 vorhanden, woran sich dann ein gewindefreier Teil 19 des Formabschnitts anschließt. Erst beim Übergang zu dem zylindrischen Gewindeabschnitt 4 ist dann wieder das Schaftgewinde 5 vorhanden. Dieses vordere Gewinde 25 dient dazu, das Eindringen der Schraube in das Material, in dem ein Loch geformt werden soll, zu beschleunigen und zu verbessern. Sobald die Schraube eingedrungen ist, dient der gewindefreie Teil dazu, das Loch in einen Durchzug umzuformen. In diesem Durchzug wird dann das Gewinde durch den Furchabschnitt gebildet.

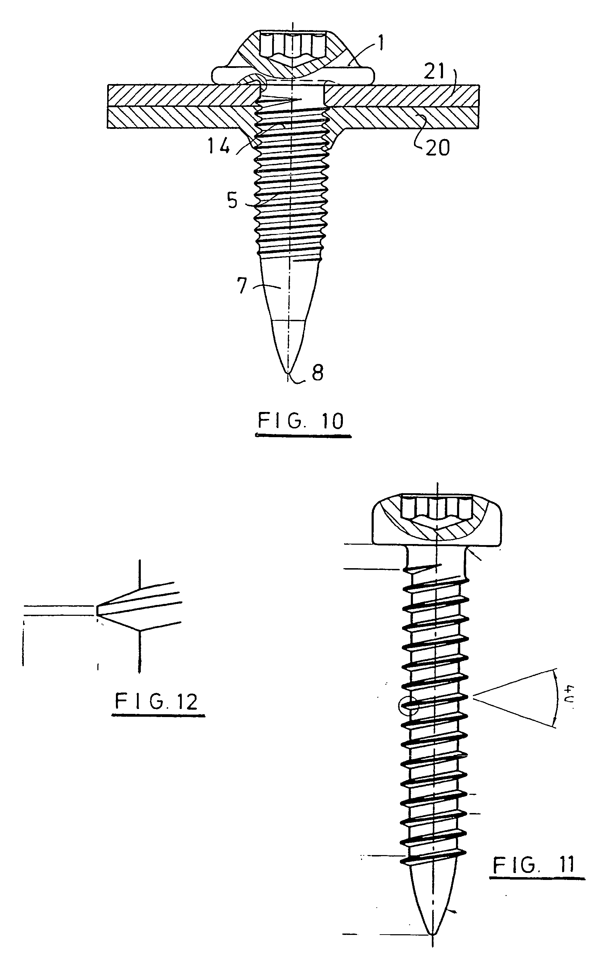

Die Figur 11 zeigt eine Seitenansicht einer weiteren Ausführungsform der Schraube, wobei die Schraube ein so genanntes Kunststoffgewinde aufweist. Zwischen den einzelnen Schraubenwindungen ist ein Abstand vorhanden. Der Spitzenwinkel des Gewindes, rechts in Figur 11 angedeutet, beträgt etwa 40°. Das Gewinde ist symmetrisch. Es bildet keine scharfe Gewindekante, sondern eine Abflachung, was links in Figur 12 zu sehen ist.

### Benutzung der beschriebenen Schraube:

Die Art der Verbindung der hier vorgeschlagenen Schraube kann am besten unter Bezugnahme auf Figur 10 erläutert werden. Als Beispiel wird dabei die Schraube der Figur 8 verwendet. Die Schraube mit der ballistischen Spitze, die im Querschnitt dreieckförmig mit abgerundeten Ecken und Seiten ausgebildet ist, wird unter hohem Druck auf die zu verbindenden Bauteile gedrückt und mithilfe eines Schraubers oder dergleichen mit hoher Drehzahl drehangetrieben. Durch die dabei entstehende Reibungswärme wird das Bauteil plastisch verformbar, so dass die ballistische Spitze durch die Bauteilwerkstoffe eindringen kann. Der angenäherte Dreiecksquerschnitt mit den abgerundeten Ecken sorgt nach dem Durchdringen der Spitze, die sich zu diesem Zeitpunkt noch immer sehr schnell dreht und mit hohem Druck angedrückt wird, für eine nur punktuelle Reibauflage am Umfang. Damit wird eine Verschweißung zwischen der Schraube und dem Bauteil vermieden.

Wenn die Spitze nahezu vollständig in das Bauteil eingedrungen ist, und gleichzeitig eine Art Durchzug entstanden ist, verringert sich aufgrund des zunehmenden Widerstands die Drehzahl auf die übliche Schraubgeschwindigkeit. Gleichzeitig wird der Anpressdruck verringert. Nun greift der erste Gewindegang des Gewindes 5 in das Bauteil ein, so dass ein Zwangsvorschub entsteht. Damit beginnt der Vorgang des Formens des Gewindes.

Das Gewinde weist ebenfalls das erwähnte Dreiecksprofil mit abgerundeten Ecken auf. Dieses Profil hat ebenfalls den Vorteil, dass durch die nicht längs eines gesamten Umfangs, sondern nur punktuelle auftretende Reibauflage eine niedrigere Reibung und somit ein geringeres Einschraubdrehmoment entsteht. Gleichzeitig weist der Bauteilwerkstoff in der auf diese Weise geformten Gewindebohrung die Neigung auf, nach innen zurückzufedern. Dadurch wird eine Art gewollte Selbsthemmung erzeugt, die dazu führt, dass die Schraubverbindung gegen ein ungewolltes Lösen gesichert wird.

Das Ergebnis kann der Figur 10 entnommen werden. Hier ist zu erkennen, dass in dem zweiten Blech 20, an dem das erste Blech 21 befestigt werden soll, ein Durchzug gebildet wurde, der eine in axialer Richtung längere Wand bildet, in der das Gewinde der Schraube eingreift. Dieser Teil des Schraubenschafts entspricht dem unter Bezugnahme auf die Figur 5 erläuterten Halteabschnitt 14.

## Patentansprüche

1. Loch- und gewindeformende Schraube, mit
1.1 einem Schraubenkopf (1), der
1.2 eine Schraubenantriebsausbildung aufweist,
1.3 einem Schraubenschaft (4), der
1.4 einen zylindrischen Gewindeabschnitt und
1.5 einen bis zu einer Schraubenspitze (8) reichenden mindestens teilweise gewindefreien Formabschnitt (7) aufweist, dessen Querschnitt in Richtung auf die Schraubenspitze (8) kontinuierlich abnimmt, wobei
1.7 das Gewinde (5) des Schraubenschafts (4) eine Gewindekante aufweist, die in einen Zylinder mit einem Querschnitt in Form eines Polygons, insbesondere eines Dreiecks, mit abgerundeten Ecken und konvex gekrümmten Seiten einbeschrieben ist und der Kernquerschnitt des Gewindeabschnitts des Schraubenschafts (4) die Form eines Polygons, insbesondere eines Dreiecks, mit abgerundeten Ecken und konvexen Seiten aufweist,
**dadurch gekennzeichnet, dass**
1.8 der Gewindeabschnitt einen ersten sich an den Formabschnitt anschließenden Furchabschnitt (15) und einen sich daran anschließenden bis zu dem Schraubenkopf (1) reichenden Halteabschnitt (14) aufweist, in dem der Querschnitt des Schraubenschafts weniger stark polygonförmig als in dem Furchabschnitt (15) ausgebildet ist.

2. Schraube nach Anspruch 1, bei der der Querschnitt des gewindefreien Schaftabschnitts (7) die Form eines Polygons, insbesondere eines Dreiecks, mit abgerundeten Ecken und konvexen Seiten aufweist.

3. Schraube nach einem der vorhergehenden Ansprüche, bei der der Außendurchmesser des Gewindes (5) im Übergang von dem Gewindeabschnitt zu dem Formabschnitt (7) abnimmt.

4. Schraube nach einem der vorhergehenden Ansprüche, bei dem die Seitenlinie (9) des Formabschnitts (17) mindestens teilweise geradlinig verläuft.

5. Schraube nach einem der vorhergehenden Ansprüche, bei der die Schraubenspitze eine scharfe Spitze (18) bildet.

6. Schraube nach einem der Ansprüche 1 bis 3, bei der die Seitenlinie (9) des Formabschnitts (7) gekrümmt verläuft.

7. Schraube nach einem der Ansprüche 1 bis 4 und 6, bei der die Schraubenspitze (8) abgerundet ausgebildet ist.

8. Schraube nach Anspruch 6 oder 7, bei der die Seitenlinie (9) des gewindefreien Formabschnitts (7) eine konstante Krümmung aufweist.

9. Schraube nach Anspruch 6 oder 7, bei der die Seitenlinie (9) des gewindefreien Formabschnitts (7) zwei Abschnitte unterschiedlicher aber konstanter Krümmung aufweist.

10. Schraube nach einem der vorhergehenden Ansprüche, bei der der Formabschnitt ein von der Schraubenspitze (28) ausgehendes erstes Gewinde (25) aufweist, an das sich der gewindefreie Abschnitt des Formabschnitts anschließt.

11. Schraube nach einem der Ansprüche 1 bis 9, bei der der Formabschnitt von der Schraubenspitze (18) ausgehend gewindefrei ist und vor dem Gewindeabschnitt ein Gewinde mit zunehmender Gewindehöhe aufweist.

12. Schraube nach einem der vorhergehenden Ansprüche, bei der das Gewinde (5) des Schraubenschafts (4) als ein Gewinde aus der Gruppe von Gewinden ausgebildet ist, die besteht aus Rundgewinde, metrisches Gewinde, Blechgewinde, selbstschneidendes Gewinde, asymmetrisches Gewinde, Grobgewinde, Linksgewinde, doppelgängiges Gewinde ausgebildet ist.

13. Verwendung einer Schraube nach einem der vorhergehenden Ansprüche bei Faserverbundstoffen und/oder bei Kunststoffen.

## Claims

1. Hole-forming and thread-forming screw, having
1.1 a screw head (1) which
1.2 has a screw-driving configuration,
1.3 a screw shank (4) which
1.4 has a cylindrical threaded portion and
1.5 an at least partially thread-free forming portion (7) which extends as far as a screw tip (8) and the cross section of which narrows continuously in the direction of the screw tip (8), wherein
1.6 the thread (5) on the screw shank (4) has a thread edge which is inscribed in a cylinder having a cross section in the form of a polygon, in particular a triangle, having rounded corners and convexly curved sides, and the core cross section of the threaded portion of the screw shank (4) has the form of a polygon, in particular a triangle, having rounded corners and convex sides,
**characterized in that**
1.7 the threaded portion has a first tapping portion (15) adjoining the forming portion and a holding portion (14) which adjoins said first tapping portion (15) and extends as far as the screw head (1) and in which the cross section of the screw shank is configured in a less strongly polygonal manner than in the tapping portion (15).

2. Screw according to Claim 1, wherein the cross section of the thread-free shank portion (7) has the form of a polygon, in particular a triangle, having rounded corners and convex sides.

3. Screw according to either of the preceding claims, wherein the outside diameter of the thread (5) narrows in the transition from the threaded portion to the forming portion (7).

4. Screw according to one of the preceding claims, wherein the lateral line (9) of the forming portion (7) extends at least partially in a straight line.

5. Screw according to one of the preceding claims, wherein the screw tip forms a sharp tip (18).

6. Screw according to one of Claims 1 to 3, wherein the lateral line (9) of the forming portion (7) extends in a curved manner.

7. Screw according to one of Claims 1 to 4 and 6, wherein the screw tip (8) is configured in a rounded manner.

8. Screw according to Claim 6 or 7, wherein the lateral line (9) of the thread-free forming portion (7) has a constant curvature.

9. Screw according to Claim 6 or 7, wherein the lateral line (9) of the thread-free forming portion (7) has two portions having different but constant curvatures.

10. Screw according to one of the preceding claims, wherein the forming portion has a first thread (25) which starts from the screw tip (28) and is adjoined by the thread-free portion of the forming portion.

11. Screw according to one of Claims 1 to 9, wherein the forming portion is thread-free starting from the screw tip (18) and has a thread having an increasing thread height before the threaded portion.

12. Screw according to one of the preceding claims, wherein the thread (5) of the screw shank (4) is configured as a thread from the group of threads which consist of a round thread, a metric thread, a sheet metal thread, a self-tapping thread, an asymmetric thread, a coarse thread, a left-hand thread or a double thread.

13. Use of a screw according to one of the preceding claims in fibre composite materials and/or in plastics materials.

## Revendications

1. Vis formant un trou et un filetage, comprenant
1.1 une tête de vis (1) qui
1.2 comprend une formation d'entraînement de vis,
1.3 une tige de vis (4) qui
1.4 comprend une portion filetée cylindrique et
1.5 une portion façonnée (7), au moins partiellement dépourvue de filetage et s'étendant jusqu'à une pointe de vis (8), dont la section transversale décroît de manière continue en direction de la pointe de vis (8),
1.7 le filetage (5) de la tige de vis (4) comprenant une arête de filetage qui est inscrite dans un cylindre présentant une section transversale en forme de polygone, en particulier en forme de triangle, doté d'angles arrondis et de côtés de courbure convexe, et la section transversale centrale de la portion filetée de la tige de vis (4) présentant la forme d'un polygone, en particulier d'un triangle, doté d'angles arrondis et de côtés convexes,
**caractérisée en ce que**
1.8 la portion filetée comprend une première portion taraudeuse (15) se raccordant à la portion façonnée et une portion de retenue (14) se raccordant à la portion taraudeuse et s'étendant jusqu'à la tête de vis (1), dans laquelle portion de retenue la section transversale de la tige de vis est réalisée de manière moins fortement polygonale que dans la portion taraudeuse (15).

2. Vis selon la revendication 1, dans laquelle la section transversale de la portion de tige (7) dépourvue de filetage présente la forme d'un polygone, en particulier d'un triangle, doté d'angles arrondis et de côtés convexes.

3. Vis selon l'une quelconque des revendications précédentes, dans laquelle le diamètre extérieur du filetage (5) décroît dans la transition de la portion filetée à la portion façonnée (7).

4. Vis selon l'une quelconque des revendications précédentes, dans laquelle la ligne latérale (9) de la portion façonnée (7) s'étend au moins partiellement de manière rectiligne.

5. Vis selon l'une quelconque des revendications précédentes, dans laquelle la pointe de vis forme une pointe acérée (18).

6. Vis selon l'une quelconque des revendications 1 à 3, dans laquelle la ligne latérale (9) de la portion façonnée (7) s'étend de manière courbe.

7. Vis selon l'une quelconque des revendications 1 à 4 et 6, dans laquelle la pointe de vis (8) est réalisée de manière arrondie.

8. Vis selon la revendication 6 ou 7, dans laquelle la ligne latérale (9) de la portion façonnée (7) dépourvue de filetage présente une courbure constante.

9. Vis selon la revendication 6 ou 7, dans laquelle la ligne latérale (9) de la portion façonnée (7) dépourvue de filetage comprend deux portions de courbures différentes mais constantes.

10. Vis selon l'une quelconque des revendications précédentes, dans laquelle la portion façonnée comprend un premier filetage (25) à partir de la pointe de vis (28), auquel se raccorde la portion dépourvue de filetage de la portion façonnée.

11. Vis selon l'une quelconque des revendications 1 à 9, dans laquelle la portion façonnée est dépourvue de filetage à partir de la pointe de vis (18) et comprend un filetage de hauteur de filetage croissante avant la portion filetée.

12. Vis selon l'une quelconque des revendications précédentes, dans laquelle le filetage (5) de la tige de vis (4) est réalisé sous forme de filetage issu du groupe de filetages qui comprend un filetage arrondi, un filetage métrique, un filetage pour tôle, un filetage autotaraudeur, un filetage asymétrique, un filetage grossier, un filetage à gauche et un filetage à double pas.

13. Utilisation d'une vis selon l'une quelconque des revendications précédentes pour des matériaux composites renforcés par des fibres et/ou pour des matières plastiques.
